# FASCICULE DE BREVET EUROPEEN

(11) **EP 4 070 139 B1**
(45) Date de publication et mention de la délivrance du brevet: **27.12.2023**
(21) Numéro de dépôt: 20828835.7
(22) Date de dépôt: 30.11.2020
(51) Int. Cl.: G02B 5/136, G02B 7/185, G02B 26/06, G02B 26/08

(54) **SYSTEME D'OPTIQUE ADAPTATIVE A TEMPS DE REPONSE AMELIORE, UTILISATION ET PROCEDE AFFERENTS**
ADAPTIVES OPTISCHES SYSTEM MIT VERBESSERTER ANTWORTZEIT, ZUGEHÖRIGE VERWENDUNG UND VERFAHREN
ADAPTIVE OPTICAL SYSTEM WITH IMPROVED RESPONSE TIME, RELATED USE AND METHOD

(30) Priorité: 04.12.2019 FR 1913769
(43) Date de publication de la demande: 12.10.2022
(73) Titulaire: ALPAO, 38330 Montbonnot-Saint-Martin (FR)
(72) Inventeur: CHARTON, Julien, Gérard, Ernest, 38660 LUMBIN (FR); HARDY, Vincent, Olivier, 38410 SAINT MARTIN D'URIAGE (FR)
(74) Mandataire: Cabinet Didier Martin
(86) Numéro de dépôt international: PCT/FR2020/052224
(87) Numéro de publication internationale: WO 2021/111068

(56) Documents cités:
- WO-A1-2019/129949
- FR-A1- 2 751 760
- DAVIES R ET AL: "Adaptive Optics for Astronomy", ARXIV.ORG, CORNELL UNIVERSITY LIBRARY, 201 OLIN LIBRARY CORNELL UNIVERSITY ITHACA, NY 14853, 27 janvier 2012 (2012-01-27), XP080560600, DOI: 10.1146/ANNUREV-ASTRO-081811-125447

## Description

### DOMAINE TECHNIQUE

La présente invention concerne le domaine technique général de l'optique adaptative, pour des applications aussi diverses que :
- la correction de perturbations ou turbulences atmosphériques, par exemple pour des applications en astronomie, en observation de l'espace proche, en imagerie et/ou communications satellitaires, en télécommunications, notamment au moyen d'équipements FSO (optique sans-fil), ou encore pour des applications militaires,
- la médecine, notamment l'ophtalmologie,
- l'utilisation de lasers, la microscopie,
- la microélectronique,
- les télécommunications,
- l'injection dans des fibres optiques,
cette liste n'étant pas limitative.

### TECHNIQUE ANTERIEURE

La présente invention se rapporte plus particulièrement à un système d'optique adaptative comportant :
- un dispositif d'optique adaptative comprenant une surface de traitement optique destinée à déformer un front d'onde incident et un dispositif de pilotage relié à ladite surface de traitement optique pour modifier de façon contrôlée le comportement optique de ladite surface de traitement optique,
- un analyseur optique destiné à être soumis à un faisceau lumineux d'entrée pour produire en réponse des signaux de sortie,
- et un dispositif de contrôle relié d'une part à l'analyseur optique et d'autre part au dispositif de pilotage pour commander ce dernier en fonction desdits signaux de sortie.

La présente invention concerne également une utilisation d'un analyseur optique conçu pour démultiplexer spatialement, par conversion de lumière multi-plan, un faisceau lumineux d'entrée en une pluralité de faisceaux lumineux élémentaires de sortie correspondant chacun à un mode spatial isolé ou à un groupe de modes spatiaux isolés.

La présente invention concerne enfin un procédé de pilotage d'un dispositif d'optique adaptative comprenant une surface de traitement optique destinée à déformer un front d'onde incident et un dispositif de pilotage relié à ladite surface de traitement optique pour modifier de façon contrôlée le comportement optique de ladite surface de traitement optique, ledit procédé comprenant une étape de soumission d'un analyseur optique à un faisceau lumineux d'entrée pour produire en réponse des signaux de sortie, ainsi qu'une étape de commande du dispositif de pilotage en fonction desdits signaux de sortie.

Les systèmes d'optique adaptative sont bien connus en tant que tels. Ils permettent de générer ou de corriger de manière dynamique et contrôlée des aberrations optique dans un front d'onde incident. Il existe de multiples applications pour de tels systèmes d'optique adaptative. Il est en particulier connu de recourir, pour corriger un front d'onde perturbé, à un système d'optique adaptative en boucle fermée qui comporte habituellement un analyseur de front d'onde, un calculateur et un correcteur de front d'onde qui se présente par exemple sous la forme d'un miroir déformable. Un tel système d'optique adaptative en boucle fermée s'avère par exemple particulièrement utile en astronomie, pour compenser les perturbations que la lumière a subies notamment en traversant l'atmosphère. Dans cet exemple particulier, le miroir déformable est soumis à un flux lumineux en provenance d'un télescope pointé vers la zone à observer (laquelle inclut par exemple un astre). Le flux lumineux incident se réfléchit sur le miroir déformable et est renvoyé, sous la forme d'un flux lumineux réfléchi, sur une lame séparatrice qui sépare le faisceau lumineux réfléchi en d'une part un faisceau d'observation qui est dirigée vers un moyen d'acquisition d'images et d'autre part un faisceau lumineux de rétroaction qui vient illuminer l'analyseur de front d'onde, lequel permet d'identifier la forme du front d'onde et fournit cette information au calculateur.

En réponse le calculateur lui-même commande une matrice d'actionneurs contrôlant la déformation du miroir déformable.

Ces systèmes d'optique adaptative connus donnent globalement satisfaction mais n'en présentent pas moins différents inconvénients relatifs en particulier à leur relative lenteur, leur degré de fiabilité loin d'être optimal, leur coût et leur encombrement.

Ces inconvénients proviennent en particulier du fait que les analyseurs de front d'onde connus utilisés généralement dans les systèmes d'optique adaptative comportent un capteur d'images matricielles (CCD ou CMOS par exemple) associé à des éléments optiques (matrice de micro-lentilles, pyramide, *etc*.) codant la phase du front d'onde en variations d'intensité mesurables par le capteur d'images matricielles (spots, franges, *etc*.). Or les capteurs d'images matricielles sont onéreux et complexes, surtout lorsqu'ils doivent être rapides et sensibles.

Ces capteurs d'images matricielles comportent en outre un grand nombre de pixels. Le temps nécessaire pour convertir les photons en signal digital, pour transférer le signal vers le calculateur et pour traiter les pixels dans le calculateur s'avère important. Sur les systèmes rapides, ce temps de latence est le principal facteur limitant la performance. En particulier, dans les secteurs d'activité tels que l'astronomie, il est possible que les perturbations atmosphériques qui perturbent le front d'onde se produisent à une vitesse qui dépasse les vitesses de calcul des systèmes d'optique adaptative classiques mettant en oeuvre un analyseur de front d'onde classique. Dans un tel cas, un traitement optimal de l'image est impossible.

Les capteurs d'images matricielles mis en oeuvre dans les systèmes connus ne mesurent en outre pas directement le front d'onde, mais son gradient. Le calculateur doit dès lors réaliser un grand nombre d'opérations afin de créer le signal de commande requis par le correcteur de front d'onde (miroir déformable). Cela est là encore source de coûts et de perte de temps. Cette relative lenteur des matériels connus peut s'avérer extrêmement dommageable dans les applications ou la vitesse de correction est critique (imagerie de satellites ou de débris par exemple).

En outre, dans ces systèmes d'optique adaptative classiques, une portion significative des photons est redondante, perdue ou sous-utilisée au niveau de l'analyseur de front d'onde, du fait précisément de l'emploi de capteurs d'images matricielles, de sorte qu'une partie de l'information contenue dans le signal lumineux est elle-même redondante, perdue ou sous-utilisée, ce qui constitue un inconvénient sérieux en particulier lorsque le signal utile est faible.

Enfin, les analyseurs de front d'onde mis en oeuvre dans les systèmes d'optique adaptative connus s'avèrent être en pratique relativement encombrants et fragiles.

### EXPOSE DE L'INVENTION

Les objets assignés à l'invention visent par conséquent à remédier aux différents inconvénients susmentionnés et à proposer un nouveau système d'optique adaptative particulièrement rapide, léger, robuste et bon marché.

Un autre objet de l'invention vise à proposer un nouveau système d'optique adaptative particulièrement compact.

Un autre objet de l'invention vise à proposer un nouveau système d'optique adaptative particulièrement fiable.

Un autre objet de l'invention vise à proposer un nouveau système d'optique adaptative particulièrement résistant aux sollicitations mécaniques intempestives, du genre chocs ou vibrations.

Un autre objet de l'invention vise à proposer un nouveau système d'optique adaptative particulièrement simple et rapide à fabriquer.

Un autre objet de l'invention vise à proposer un nouveau système d'optique adaptative présentant une architecture universelle qui se prête à une multiplicité d'applications et d'arrangements optiques, en boucle fermée ou en boucle ouverte.

Un autre objet de l'invention vise à proposer un nouveau système d'optique adaptative dont la conception permet de minimiser la puissance requise des moyens électroniques de calcul, voire même dans certains cas de se passer de tels moyens de calcul.

Un autre objet de l'invention vise à proposer un nouveau système d'optique adaptative dont la performance, et en particulier la bande passante de correction, n'est pas limitée par les performances de l'analyseur de front d'onde ou du calculateur.

Un autre objet de l'invention vise à proposer un nouveau système d'optique adaptative particulièrement précis et de construction extrêmement simplifiée et légère.

Un autre objet de l'invention vise à proposer un nouveau système d'optique adaptative facile et rapide à entretenir et à régler.

Un autre objet de l'invention vise à proposer un nouveau système d'optique adaptative qui met en oeuvre des composants simples, légers, robustes et bon marché.

Un autre objet de l'invention vise à proposer un nouveau système d'optique adaptative particulièrement facile et rapide à paramétrer.

Un autre objet de l'invention vise à proposer une nouvelle utilisation d'un démultiplexeur mettant en oeuvre une conversion de lumière multi-plan, qui permet d'obtenir un nouveau système d'optique adaptative particulièrement rapide, fiable, compact, léger et robuste.

Un autre objet de l'invention vise à proposer un nouveau procédé de pilotage d'un dispositif d'optique adaptative qui permet un réglage dynamique du comportement optique de la surface de traitement optique dudit dispositif d'optique adaptative avec une vitesse particulièrement élevée et de manière particulièrement fiable.

Les objets assignés à l'invention sont atteints à l'aide d'un système d'optique adaptative comportant :
- un dispositif d'optique adaptative comprenant une surface de traitement optique destinée à déformer un front d'onde incident et un dispositif de pilotage relié à ladite surface de traitement optique pour modifier de façon contrôlée le comportement optique de ladite surface de traitement optique,
- un analyseur optique destiné à être soumis à un faisceau lumineux d'entrée pour produire en réponse des signaux de sortie,
- un dispositif de contrôle relié d'une part à l'analyseur optique et d'autre part au dispositif de pilotage pour commander ce dernier en fonction desdits signaux de sortie,
caractérisé en ce que ledit analyseur optique est conçu pour démultiplexer spatialement, par conversion de lumière multi-plan, le faisceau lumineux d'entrée en une pluralité de faisceaux lumineux élémentaires de sortie correspondant chacun à un mode spatial isolé ou à un groupe de modes spatiaux isolés, lesdits signaux de sortie étant formés par lesdits, ou à partir desdits, faisceaux lumineux élémentaires.

Les objets assignés à l'invention sont aussi atteints à l'aide d'une utilisation d'un analyseur optique conçu pour démultiplexer spatialement, par conversion de lumière multi-plan, un faisceau lumineux d'entrée en une pluralité de faisceaux lumineux élémentaires de sortie correspondant chacun à un mode spatial isolé ou à un groupe de modes spatiaux isolés, pour fournir des signaux servant à piloter la modification du comportement optique d'une surface de traitement optique d'un dispositif d'optique adaptative destinée à déformer de façon contrôlée un front d'onde incident.

Les objets assignés à l'invention sont enfin également atteints à l'aide d'un procédé de pilotage d'un dispositif d'optique adaptative comprenant une surface de traitement optique destinée à déformer un front d'onde incident et un dispositif de pilotage relié à ladite surface de traitement optique pour modifier de façon contrôlée le comportement optique de ladite surface de traitement optique, ledit procédé comprenant une étape de soumission d'un analyseur optique à un faisceau lumineux d'entrée pour produire en réponse des signaux de sortie, ainsi qu'une étape de commande du dispositif de pilotage en fonction desdits signaux de sortie, ledit procédé étant caractérisé en ce que ledit analyseur optique démultiplexe spatialement, par conversion de lumière multi-plan, le faisceau lumineux d'entrée en une pluralité de faisceaux lumineux élémentaires de sortie correspondant chacun à un mode spatial isolé ou à un groupe de modes spatiaux isolés, lesdits signaux de sortie étant formés par lesdits, ou à partir desdits, faisceaux lumineux élémentaires.

### DESCRIPTION SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
La Figure 1 illustre, de façon schématique, un exemple de réalisation d'un système d'optique adaptative conforme à l'invention, qui met en oeuvre un miroir déformable en tant que dispositif d'optique adaptative, pour corriger en temps réel un front d'onde incident perturbé.
La Figure 2 illustre, de manière schématique, le principe technique sous-tendant le fonctionnement de l'analyseur optique du système d'optique adaptative de la figure 1.
La Figure 3 est une vue agrandie d'un détail de réalisation de l'analyseur de front d'onde illustré schématiquement par la figure 2.
La Figure 4 est une vue agrandie d'un détail de la figure 3.
La Figure 5 illustre, selon une vue schématique en perspective de dessus, un miroir déformable modal qui peut être avantageusement mis en oeuvre dans le système d'optique adaptative de la figure 1.
La Figure 6 illustre, selon une vue schématique en perspective de dessous, un détail de réalisation du miroir déformable de la figure 5.

### MANIERES DE REALISER L'INVENTION

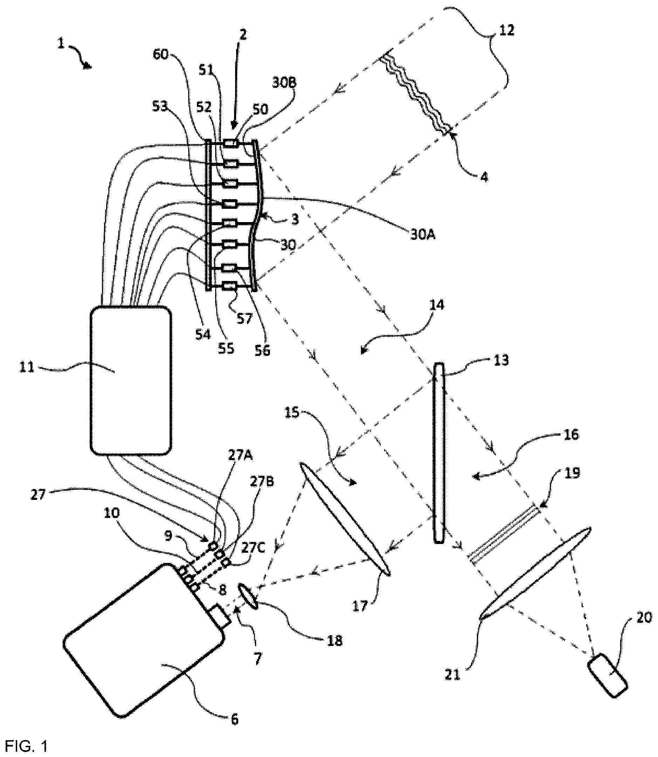

L'invention concerne, selon un premier aspect, un système d'optique adaptative 1 destiné par exemple à introduire ou à corriger, de préférence en continu, une aberration optique dans un front d'onde. Dans un mode de réalisation particulier, qui correspond à l'exemple illustré à la figure 1, le système d'optique adaptative 1 est conçu pour corriger en temps réel, de manière dynamique et contrôlée, les déformations évolutives et imprévisibles d'un front d'onde 4, lesdites déformations résultant par exemple de perturbations et/ou turbulences atmosphériques. Un tel système s'avère particulièrement adapté pour des applications telles que par exemple :
- l'observation astronomique,
- l'observation de l'espace proche,
- l'imagerie par satellite,
- les télécommunications par satellite,
- les communications au moyen d'équipements FSO (optique sans-fil),
- certaines applications militaires,
pour lesquelles la vitesse de correction est un paramètre critique.

L'invention n'est toutefois pas limitée aux applications spécifiques susvisées et le système d'optique adaptative 1 conforme à l'invention peut être utilisé pour de multiples applications et être par exemple inclus dans, ou former un, système d'observation microscopique, ou un système d'agrandissement ou de rétrécissement d'images, ou un système de zoom, ou un système de déformation d'image, ou un système d'imagerie ophtalmologique, ou un système de télécommunications terrestre, ou un système d'injection dans des fibres optiques... sans que cette liste ne soit limitative.

Le système d'optique adaptative 1 comporte, comme illustré à la figure 1, un dispositif d'optique adaptative 2 comprenant une surface de traitement optique 3 destinée à déformer un front d'onde incident 4. Le front d'onde incident 4 est par exemple un front d'onde perturbé, qui est déformé en raison de perturbations dues à la traversée de l'atmosphère terrestre. Le dispositif d'optique adaptative 2 est avantageusement un dispositif actif qui vise à compenser, de préférence exactement, en temps réel et de manière continue et dynamique, la perturbation qui déforme le front d'onde incident 4. Le dispositif d'optique adaptative 2 comprend également un dispositif de pilotage 5 relié à la surface de traitement optique 3 pour modifier de façon contrôlée le comportement optique de ladite surface de traitement optique, de préférence de manière dynamique (modifiable) et avantageusement en temps réel. Le dispositif d'optique adaptative 2 constitue ainsi un dispositif actif, qui agit de préférence en permanence, de manière continue et contrôlée, pour déformer le front d'onde incident 4, afin avantageusement de corriger ce dernier. De façon avantageuse, le dispositif d'optique adaptative 2 est un dispositif actif de correction de front d'onde conçu pour assurer une correction de phase (par exemple sous la forme de l'introduction d'un retard de phase) afin de modifier la forme du front d'onde 4 (en vue par exemple d'en rétablir la planéité).

A cette fin, le dispositif d'optique adaptative 2 est par exemple conçu pour modifier de façon dynamique la distribution spatiale de l'indice de réfraction de la surface de traitement optique 3. Dans ce cas, la surface de traitement optique 3 est par exemple constituée par un panneau à cristaux liquides du genre écran LCD. Le dispositif de pilotage 5 est quant à lui avantageusement formé dans ce cas par un microcontrôleur qui pilote la matrice à cristaux liquides formant la surface de traitement optique 3, de façon à modifier de manière dynamique la distribution spatiale de l'indice de réfraction au sein de la matrice à cristaux liquides (par changement de couleur). Le front d'onde incident 4 traverse ainsi la matrice à cristaux liquides formant dans ce cas la surface de traitement optique 3, ce qui entraîne au passage la déformation du front d'onde en raison des retards de phase introduits localement par la matrice à cristaux liquides. Dans ce mode de réalisation, la modification du comportement optique de la surface de traitement optique 3 consiste en une modification de la distribution spatiale de l'indice de réfraction du matériau formant la surface de traitement optique 3, pour introduire localement une différence de chemin optique.

Alternativement (et comme illustré aux figures), le dispositif d'optique adaptative 2 est par exemple conçu pour modifier de façon dynamique la géométrie de la surface de traitement optique 3. Dans ce cas, la surface de traitement optique 3 est par exemple constituée par une surface déformable comme illustré aux figures. Le dispositif de pilotage 5 est avantageusement formé dans ce cas par un ou plusieurs actionneurs (de préférence une matrice d'actionneurs) reliés à la surface déformable formant la surface de traitement optique 3, pour déformer cette dernière de façon contrôlée. Dans ce mode de réalisation, la modification du comportement optique de la surface de traitement optique 3 consiste ainsi en une déformation de la surface de traitement optique 3, pour faire varier la distribution spatiale du chemin géométrique.

En résumé, le dispositif d'optique adaptative 2 comprend avantageusement une surface de traitement optique 3 destinée à déformer un front d'onde incident 4 et un dispositif de pilotage 5 relié à ladite surface 3 pour soit déformer cette dernière de façon contrôlée (miroir déformable ou lentille adaptative par exemple) soit modifier de façon contrôlée la distribution spatiale de l'indice de réfraction au sein de la surface 3 (correcteur de front d'onde à cristaux liquides par exemple).

Dans le mode de réalisation illustré aux figures, le dispositif d'optique adaptative 2 est un miroir déformable pourvu d'une surface réfléchissante déformable formant ladite surface de traitement optique 3. L'invention n'est toutefois pas limitée à la mise en oeuvre, en tant que dispositif d'optique adaptative 2, d'un miroir déformable. Alternativement, le dispositif d'optique adaptative 2 peut constituer une lentille adaptative, conçue pour réfracter un front d'onde de manière dynamique, afin par exemple d'introduire ou de corriger une aberration optique dans le front d'onde en question. Dans ce qui suit, par souci de concision, il sera fait uniquement référence à un dispositif d'optique adaptative 2 constitué par un miroir déformable, étant entendu que l'invention n'est toutefois nullement limitée à ce mode de réalisation particulier et peut alternativement mettre en oeuvre comme exposé ci-avant une lentille adaptative ou une matrice à cristaux liquides à la place du miroir déformable décrit dans ce qui suit à titre d'exemple non limitatif.

Le système d'optique adaptative 1 comporte également un analyseur optique 6 destiné à être soumis à un faisceau lumineux d'entrée 7 pour produire en réponse des signaux de sortie 8, 9, 10. L'analyseur optique 6 fait avantageusement office d'analyseur de front d'onde visant à fournir au système une information sur la forme du front d'onde utile pour piloter le comportement optique de la surface de traitement optique 3, et par exemple pour piloter la déformation de la surface déformable formant la surface de traitement optique 3 selon le mode de réalisation illustré aux figures.

Le système d'optique adaptative 1 comporte également un dispositif de contrôle 11 relié d'une part à l'analyseur optique 6 et d'autre part au dispositif de pilotage 5 pour commander ce dernier en fonction desdits signaux de sortie 8, 9, 10. Le dispositif de pilotage 5 comprend avantageusement une pluralité d'actionneurs 50, 51, 52, 53, 54, 55, 56, 57 espacés les uns des autres et reliés à la surface déformable formant avantageusement la surface 3 par tout moyen connu, pour chacun exercer localement sur la surface 3 une force externe de déformation de la surface 3. Lesdits actionneurs 50, 51, 52, 53, 54, 55, 56, 57 peuvent être de tout type connu, et par exemple être formés d'actionneurs piézoélectriques, magnétiques, en deux parties, mécaniques, à vis, *etc.* Le dispositif de contrôle 11 fournit avantageusement à chaque actionneur un signal électrique de commande respectif qui dépend desdits signaux de sortie 8, 9, 10. Le dispositif de contrôle 11 commande ainsi individuellement et simultanément les actionneurs 50, 51, 52, 53, 54, 55, 56, 57 pour adapter en permanence le profil de la surface déformable formant avantageusement la surface d traitement optique 3 en fonction des signaux de sortie 8, 9, 10 fournis par l'analyseur optique 6 en réponse au faisceau lumineux d'entrée 7.

Dans le mode de réalisation illustré à la figure 1, le système d'optique adaptative 1 fonctionne selon une boucle de régulation fermée, qui permet d'adapter en permanence le profil de la surface déformable formant avantageusement la surface de traitement optique 3 grâce aux signaux de sortie 8, 9, 10 fournis par l'analyseur 6. Il est cependant parfaitement envisageable, selon un mode de réalisation alternatif, que le système d'optique adaptative 1 fonctionne selon une boucle ouverte.

Avantageusement, et comme illustré à la figure 1, le système d'optique adaptative 1 comprend un diviseur de faisceau 13 agencé relativement au dispositif d'optique adaptative 2 et à l'analyseur optique 6 pour qu'un faisceau lumineux incident 12 (en provenance par exemple d'un télescope), qui se caractérise par le profil d'onde incident 4, soit réfléchi et/ou réfracté par la surface de traitement optique 3 du dispositif d'optique adaptative 2, pour former un faisceau lumineux modifié 14 renvoyé sur ledit diviseur de faisceau 13. Ce dernier sépare le faisceau lumineux modifié 14 en un premier faisceau 15 et un deuxième faisceau 16. Le diviseur de faisceau 13 peut être avantageusement formé par une lame semi-réfléchissante, qui sépare le faisceau lumineux modifié 14 en deux flux lumineux, l'un réfléchi (correspondant au premier faisceau 15 dans l'exemple illustré à la figure 1), et l'autre réfracté (correspondant, dans l'exemple de la figure 1, au deuxième faisceau 16 à exploiter). L'invention n'est toutefois absolument pas limitée à ce mode de réalisation particulier et tout autre agencement d'optique adaptative peut être mis en oeuvre, sans pour autant que l'on sorte du cadre de l'invention.

Le premier faisceau 15 forme le faisceau lumineux d'entrée 7, soit directement, soit indirectement par traitement au moyen par exemple d'un dispositif optique. Le dispositif optique en question comprend par exemple une ou plusieurs lentilles 17, 18 qui traitent le premier faisceau lumineux 15 pour que ce dernier forme le faisceau lumineux d'entrée 7 exploitable par l'analyseur optique 6. Dans le mode de réalisation spécifique illustré à la figure 1, les lentilles 17, 18 sont agencées selon un montage en série de type télescope, avec par exemple la lentille 17 qui assure une convergence du premier faisceau 15 tandis que la lentille 18 est une lentille de collimation qui permet d'obtenir en sortie un faisceau lumineux collimaté formant le faisceau lumineux d'entrée 7. L'invention n'est cependant pas limitée à ce mode de réalisation particulier, et tout autre moyen de traitement ou transformation du premier faisceau 15 pourra être mis en oeuvre, ou à l'inverse aucun moyen du tout si l'analyseur optique 6 est directement soumis au premier faisceau 15 qui forme alors directement le faisceau lumineux d'entrée 7.

Le deuxième faisceau 16 constitue quant à lui un deuxième faisceau 16 à exploiter par l'utilisateur du système d'optique adaptative 1. Ce deuxième faisceau 16, dont le front d'onde 19 a été rectifié par le dispositif d'optique adaptative 2, est par exemple capté par un dispositif d'imagerie 20 qui bénéficie dès lors d'une image nette puisque les déformations intempestives du front d'onde incident 4 ont été compensées par la déformation de la surface réfléchissante déformable formant avantageusement la surface de traitement optique 3 du dispositif d'optique adaptative 2 (constitué dans l'exemple illustré par un miroir déformable). Dans le mode de réalisation illustré aux figures, le deuxième faisceau 16 traverse par exemple une lentille 21 qui le fait converger sur le ou les capteurs du dispositif d'imagerie 20. Cet agencement est bien entendu un exemple purement illustratif et non limitatif.

Avantageusement, le diviseur de faisceau 13 est chromatique, de façon à ce que ledit premier faisceau 15 soit formé par un rayonnement dont la bande spectrale diffère de celle du rayonnement formant le deuxième faisceau 16. Cela permet d'utiliser pour l'analyseur optique 6 une bande spectrale qui est moins utile pour l'application concernée.

Selon une caractéristique importante de l'invention, l'analyseur optique 6 est conçu pour démultiplexer spatialement, par conversion de lumière multi-plan, le faisceau lumineux d'entrée 7 en une pluralité de faisceaux lumineux élémentaires de sortie 80, 90, 100 correspondant chacun à un mode spatial isolé ou à un groupe de modes spatiaux isolés, lesdits signaux de sortie 8, 9, 10 étant formés par lesdits, ou à partir desdits, faisceaux lumineux élémentaires 80, 90, 100. L'analyseur optique 6 repose ainsi non pas sur un échantillonnage du front d'onde, par exemple au moyen d'une trame de micro-lentilles et d'une caméra CCD, comme dans l'art antérieur, mais sur une décomposition du faisceau lumineux d'entrée 7 (dont le front d'onde est éventuellement perturbé selon une pluralité de modes de déformation différents) en une pluralité de faisceaux lumineux élémentaires de sortie 80, 90, 100, distincts les uns des autres et séparés les uns des autres, chaque faisceau lumineux de sortie 80, 90, 100 correspondant à un unique mode spatial, ou éventuellement à un groupe de modes spatiaux, par exemple des groupes de modes spatiaux du même ordre radial ou azimutal.

En d'autres termes, l'invention est basée sur un principe tout à fait original d'analyse du front d'onde consistant avantageusement à décomposer physiquement le faisceau lumineux d'entrée, qui est affecté par différentes aberrations (ou modes de déformation, ou modes de Zernike) en une série de faisceaux lumineux élémentaires 80, 90, 100 correspondant chacun à une aberration (ou mode de Zernike) élémentaire, ou un groupe d'aberrations (ou de modes de Zernike) du même ordre.

Ce démultiplexage spatial est effectué par un procédé de conversion de lumière multi-plan, qui est connu en tant que tel et décrit par exemple dans l'article intitulé « Programmable unitary spatial mode manipulation » (Morizur et al., J. Opt. Soc. Am. A/vol. 27, No. 11 / November 2010: 2524-2531), ou par exemple dans les brevets US-9,250,454 et US-10,324,286 dont le contenu est incorporé par référence. La méthode de conversion de lumière multi-plan, également désignée par l'appellation « *MPLC »* (acronyme anglophone de « *Multi-Plane Light Conversion* ») est une technique basée sur la décomposition d'une transformation spatiale unitaire en une succession de transformations primaires affectant le profil de phase transverse du rayonnement lumineux. Sur la base de ce principe, il est possible de multiplexer ou démultiplexer spatialement un faisceau lumineux. Dans le cadre de l'invention, la technique de conversion de lumière multi-plan est mise à profit pour démultiplexer le faisceau lumineux afin de fournir ainsi un signal de commande au dispositif de contrôle 11. L'un des intérêts majeurs de recourir à un analyseur optique 6 mettant en oeuvre un démultiplexage spatial par conversion de lumière multi-plan réside dans le fait qu'une telle conversion de lumière multi-plan peut être mise en oeuvre à l'aide de composants totalement passifs, ce qui confère à l'analyseur optique 6 un caractère particulièrement fiable et robuste, ainsi qu'un temps de réponse particulièrement court.
- Le démultiplexage spatial par conversion de lumière multi-plan mis en oeuvre dans le cadre de l'invention peut être effectué à l'aide de tous moyens connus, et en particulier à l'aide des moyens décrits dans les documents suivants dont le contenu est incorporé par référence:
- WO-2012/085 046,
- WO-2017/158 262,
- WO-2017/158 261,
- WO-2019/155 085,
- WO-2019/129 954,
- WO-2019/129 949,
- WO-2019/162 637,
- le mémoire de thèse de Damien Gatinel « Une nouvelle méthode de décomposition polynomiale d'un front d'onde oculaire » Organes des sens. Université Paris-Saclay, 2017.NNT: 2017SACLV042. tel-01617820. HAL Id: tel-01617820 ; https:lltel.archives-ouvertes.fr/tel-01617820 ;
- le mémoire de thèse de Philippe Genevaux « Le multiplexage de mode spatial pour augmenter le débit dans les fibres optiques » Optique [physics.optics]. Université Pierre et Marie Curie - Paris VI, 2016. Français. NNT : 2016PA066336. HAL Id: tel-01470296 https:/ltel.archives-ouvertes.fr/tel-01470296 ;
- l'article « Design of high order mode-multiplexers using multiplane light conversion » de N. K. Fontaine et al., présenté à la 43ème conférence européenne sur les communications optiques de 2017 (ECOC, 2017), DOI: 10.1109/ECOC.2017.8346129 ;
- l'article « Characterization and applications of spatial mode multiplexers based on Multi-Plane Light Conversion » de Guillaume Labroille, Nicolas Barré, Olivier Pinel, Bertrand Denolle, Kevin Lenglé, Lionel Garcia, Lionel Jaffrès, Pu Jian, Jean-François Morizur - Optical Fiber Technology, Volume 35, Février 2017, pages 93-99, https://doi.org/10.1016/j.yofte.2016.09.005 ;
- l'article de G.Labroille, P. Jian, N. Barré, B. Denolle, et J-F. Morizur « Mode sélective 10-mode multiplexer based on multi-plane light conversion », Optical Fiber Communication Conférence - OSA Technical Digest (online) - Optical Society of America, 2016, paper Th3E.5 - https://doi.org/10.1364/OFC.2016.Th3E.5 ;
- l'article de G.LABROILLE et al. « efficient and mode sélective spatial mode multiplexers based on multiplane light conversion », Optics Express 30 juin 2014, volume 22, numéro 13, page 15 599 ;
- l'article « Fabrication and Characterization of a Mode-selective 45-Mode Spatial Multiplexer based on Multi-Plane Light Conversion » de Satyanarayana Bade, Bertrand Denolle, Gauthier Trunet, David Allioux, Pu Jian, Olivier Pinel, Guillaume Labroille, présenté à la conférence Optical Fiber Communications Conférence and Exposition (OFC) de 2018 - INSPEC Accession Number: 17856001 -Version V3 mise à jour : arXiv:1803.07907v3 [physics.app-ph].

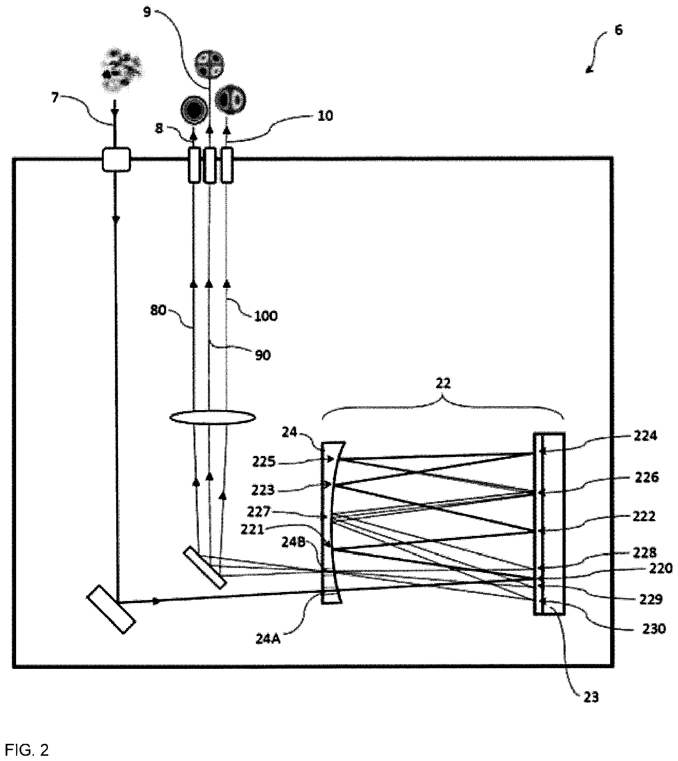

De façon particulièrement préférentielle et conformément au mode de réalisation illustré aux figures, l'analyseur optique 6 comprend une cavité multi-passage 22 délimitée par des premier et deuxième éléments réfléchissants 23, 24 sur chacun desquels ledit faisceau lumineux d'entrée 7 est destiné à se réfléchir une pluralité de fois en une pluralité d'emplacements de réflexion 220, 221, 222, 223, 224, 225, 226, 227, 228, 229, 230 différents, au moins certains desdits emplacements de réflexion 220, 221, 222, 223, 224, 225, 226, 227, 228, 229, 230 étant chacun pourvu d'un élément de modification de phase 25, pour modifier la phase spatiale du faisceau lumineux. La cavité multi-passage 22 est ainsi formée par les premier et deuxième éléments réfléchissants 23, 24 disposés en vis-à-vis, à distance l'un de l'autre (cf. figure 2), de sorte que le faisceau lumineux d'entrée 7 subit une succession de réflexions chacune suivie par une propagation en espace libre (non guidée), les éléments de modification de phase 25 présents au niveau des emplacements de réflexion 220-230 induisant un déphasage local au sein de la section transversale du faisceau. Le faisceau lumineux 7 subit ainsi, au sein de la cavité multi-passage 22, une succession de transformations spatiales élémentaires de la phase du rayonnement lumineux selon un profil spatial déterminé qui permet d'obtenir un démultiplexage du faisceau initial 7 conduisant à l'obtention en sortie de la cavité 22 d'une pluralité de faisceaux lumineux formant lesdits faisceaux élémentaires de sortie 80, 90, 100. Par souci de simplicité et de concision, l'exemple des figures illustre une décomposition en trois faisceaux lumineux élémentaires de sortie 80, 90, 100 correspondant chacun à un mode élémentaire de déformation (par exemple un mode de Zernike). L'invention n'est bien entendu pas limitée à ce nombre particulier, et le faisceau d'entrée 7 peut être décomposé en un nombre de faisceaux lumineux élémentaires de sortie inférieur à 3 (par exemple 2) ou de préférence largement supérieur à 3 (par exemple 6, 8, 10 ou plusieurs dizaines).

De façon particulièrement avantageuse, l'analyseur optique 6 mis en oeuvre dans le cadre de l'invention repose dans son principe et son fonctionnement sur le principe exposé dans le document WO-2019/129949 (dans lequel le démultiplexage spatial est par exemple enseigné en page 13, ligne 27 à 33) et/ou dans l'article précité « Fabrication and Characterization of a Mode-selective 45-Mode Spatial Multiplexer based on Multi-Plane Light Conversion » de Satyanarayana Bade, Bertrand Denolle, Gauthier Trunet, David Allioux, Pu Jian, Olivier Pinel, Guillaume Labroille, présenté à la conférence Optical Fiber Communications Conférence and Exposition (OFC) de 2018 - INSPEC Accession Number: 17856001 - Version V3 mise à jour référencée: arXiv: 1803.07907v3 [physics.app-ph].

Le recours à une cavité multi-passage 22 mettant en oeuvre des éléments de modification de phase 25 réflexifs permet d'obtenir un analyseur optique 6 particulièrement compact, léger et robuste. Alternativement, il est parfaitement possible de recourir à des éléments de modification de phase transmissifs sans pour autant que l'on sorte du cadre de l'invention.

Avantageusement, les éléments de modification de phase 25 sont formés par une structure de déphasage passive dont la conformation est figée. En d'autres termes, la structure de déphasage formant les éléments de modification de phase 25 présente une conformation non évolutive, fixe, ce qui permet de conférer une excellente robustesse et fiabilité à l'analyseur optique 6. Il est cependant parfaitement envisageable que la structure de déphasage soit plutôt de nature active et composée par exemple d'une matrice de micro-miroirs à orientation variable, sans pour autant que l'on sorte du cadre de l'invention.

Avantageusement, lesdits premier et deuxième éléments réfléchissants 23, 24 sont eux-mêmes fixes et passifs, ce qui permet là encore de conférer un caractère fiable et robuste à l'analyseur optique 6.

Avantageusement, le premier élément réfléchissant 23 est constitué d'un miroir globalement plan, tandis que le deuxième élément réfléchissant 24 est lui aussi constitué par un miroir, qui présente de préférence une forme légèrement incurvée, avec une concavité orientée vers le premier élément réfléchissant 23 comme illustré en figure 2.

Dans le mode de réalisation illustré aux figures, le deuxième élément réfléchissant 24 est pourvu d'un ou plusieurs passages 24A, 24B ménagés à travers son épaisseur pour permettre respectivement :
- au rayonnement incident correspondant au faisceau lumineux d'entrée 7 de pénétrer à l'intérieur de la cavité multi-passage 22 et/ou
- aux faisceaux lumineux élémentaires de sortie 80, 90, 100 de sortir de ladite cavité multi-passage 22.

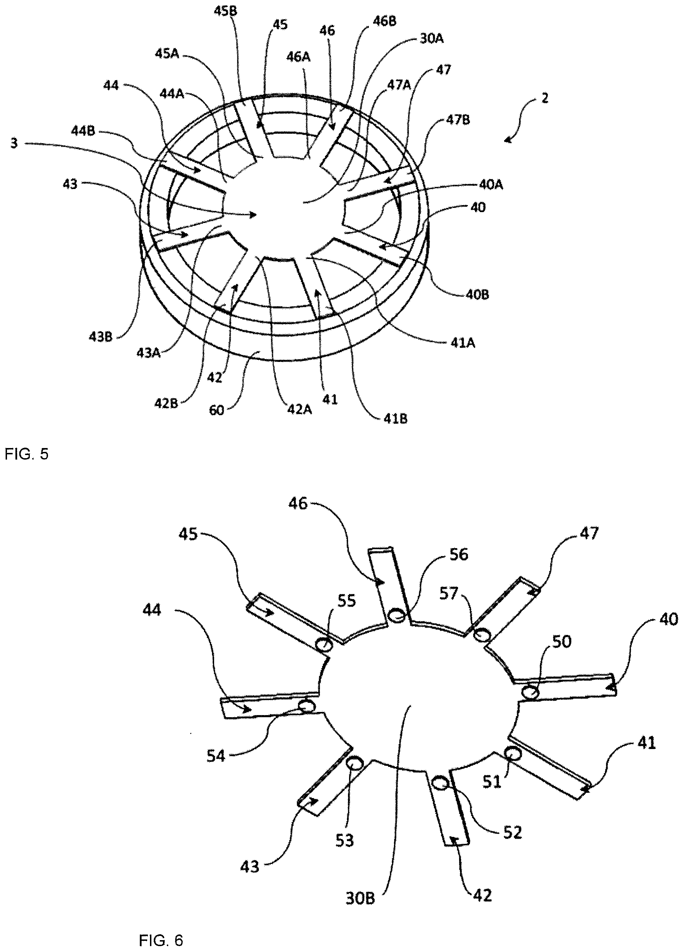

Un tel agencement confère une compacité élevée à l'analyseur 6. Il est cependant parfaitement envisageable, sans pour autant que l'on sorte du cadre invention, que le deuxième élément réfléchissant 24 ne soit pourvu d'aucun passage et que les faisceaux lumineux d'entrée 7 et de sortie 80, 90, 100 entrent et sortent par le côté de la cavité multi-passage 22, conformément par exemple à la conception illustrée par la figure 5a du document WO-2019/162637 dont le contenu est incorporé par référence.

Avantageusement, tous les éléments de modification de phase 25 sont disposés uniquement sur le premier élément réfléchissant 23, à distance les uns des autres. Dans ce cas, seul le premier élément réfléchissant 23 forme un dispositif de déphasage optique, tandis que le deuxième élément réfléchissant 24 se comporte quant à lui uniquement comme un miroir simple qui n'assure de préférence pas de fonction de déphasage. L'invention n'est toutefois pas limitée à ce mode spécifique de réalisation, et il est par exemple parfaitement envisageable que le deuxième élément réfléchissant 24 assume lui aussi une fonction de déphasage optique, seul ou en combinaison avec le premier élément réfléchissant 23.

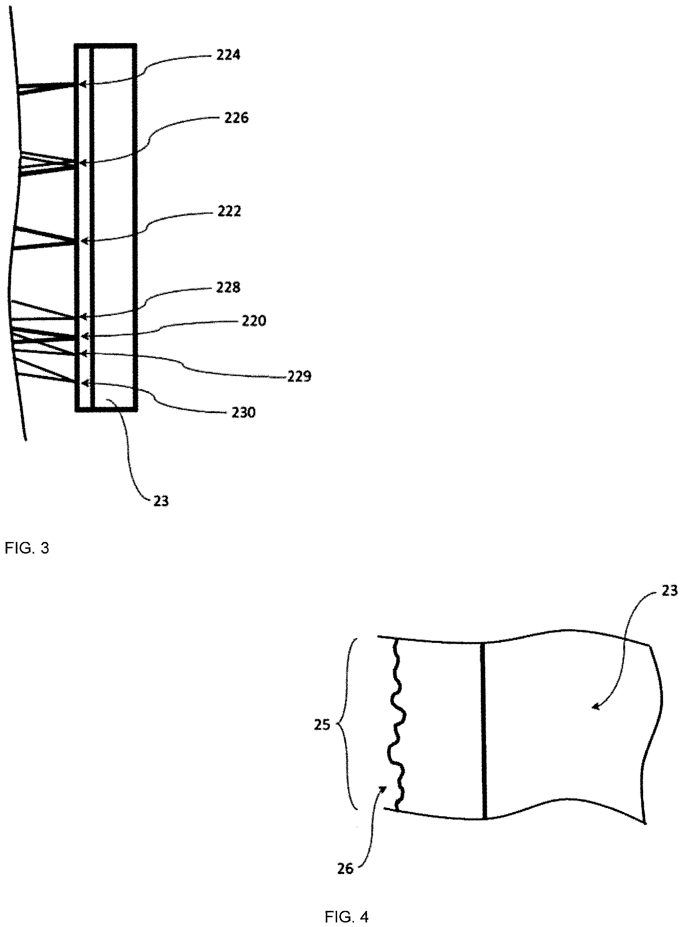

Avantageusement, et conformément au mode de réalisation illustré aux figures, chacun des éléments de modification de phase 25 est formé par une irrégularité de surface 26 de l'élément réfléchissant 23 concerné, comme illustré à la figure 4. De façon particulièrement préférentielle, lesdites irrégularités de surface 26 sont formées par une microstructuration de ladite surface de l'élément réfléchissant 23 concerné.

Dans ce mode de réalisation particulièrement avantageux, la cavité multi-passage 22 comprend ainsi un miroir à surface texturée qui forme le premier élément réfléchissant 23, et un autre miroir, dont la surface n'est au contraire pas texturée (mais pourrait parfaitement l'être sans pour autant que l'on sorte du cadre de l'invention) constituant le deuxième élément réfléchissant 24. La microstructuration de la surface est par exemple obtenue par lithographie, étant entendu que l'invention n'est absolument pas limitée à un procédé de fabrication particulier.

En définitive, le fonctionnement de l'analyseur optique mis en oeuvre dans le cadre du mode de réalisation avantageux illustré aux figures repose sur une succession de réflexions du faisceau lumineux 7 et de déphasages locaux de ce dernier, séparés par des propagations du faisceau en espace libre non guidé, de sorte que le faisceau lumineux subit à l'intérieur de la cavité multi-passage 22 une successions de transformation élémentaires conduisant à sa décomposition en de multiples faisceaux 80, 90, 100 correspondant chacun à un mode de déformation particulier. En d'autres termes, au cours de ses différents trajets de réflexion entre les deux éléments réfléchissants 23, 24 de la cavité multi-passage 22, le faisceau lumineux rencontre différentes zones de déphasage localisées induisant une transformation élémentaire respective du profil spatial du faisceau, la succession de ces transformations induites par chaque zone de déphasage conduisant au démultiplexage souhaité.

L'analyseur optique 6 permet ainsi, par démultiplexage spatial, de fournir en sortie différents faisceaux lumineux élémentaires de sortie 80, 90, 100 dont le profil spatial respectif correspond à une aberration optique élémentaire donnée (par exemple un mode de Zernike donné) et/ou à un groupe d'aberrations optique élémentaires données (un tel groupe pouvant correspondre par exemple à des aberrations optique du même ordre).

Avantageusement, le système d'optique adaptative 1 comprend un dispositif 27 de transformation de chaque faisceau élémentaire de sortie 80, 90, 100 en un signal électrique respectif, de façon à ce que lesdits signaux de sortie 8, 9, 10 soient électriques. Par exemple, le dispositif 27 de transformation de chaque faisceau élémentaire 80, 90, 100 en un signal électrique respectif inclut des capteurs de lumière 27A, 27B, 27C, comme par exemple des photodiodes, des détecteurs à transfert de charges (CCD) ou des capteurs CMOS (par exemple des capteurs CMOS linéaires) ou encore des photomultiplicateurs.

Grâce à l'invention, il n'est ainsi plus nécessaire d'intégrer des imageurs matriciels coûteux et lents, et un seul capteur de flux lumineux (une photodiode par exemple) peut être mis en oeuvre, dans le cadre d'une conception optimale, pour chaque degré de liberté. A titre de comparaison, un détecteur de front d'onde de type Shack-Hartmann nécessite typiquement au moins 36 pixels par degré de liberté.

Dans un mode de réalisation particulier, le miroir déformable qui forme préférentiellement le dispositif d'optique adaptative 2 est un miroir déformable modal, formant avantageusement un correcteur de front d'onde modal. Un tel miroir déformable peut être par exemple constitué par le miroir déformable modal vendu sous la dénomination « *ALPAO* - *DMM* » par la société de droit français ALPAO - 727, Rue Aristide Bergès-38330 Montbonnot - France. Un tel miroir déformable modal permet de corriger ou de générer, de manière extrêmement simple et rapide, les aberrations optiques les plus communes. Chaque canal de contrôle d'un miroir déformable modal correspond ainsi avantageusement à un mode spatial prédéterminé (par exemple un mode de Zernike). Le dispositif de pilotage 5, qui inclut avantageusement une pluralité d'actionneurs 50, 51, 52, 53, 54, 55, 56, 57, est ainsi dans ce cas avantageusement conçu pour déformer la surface réfléchissante déformable formant avantageusement la surface de traitement optique 3 selon différents modes de Zernike. Un miroir déformable modal repose ainsi avantageusement sur un contrôle modal, selon lequel le front d'onde est exprimé comme une combinaison de modes élémentaires (modes de Zernike) qui correspond aussi fidèlement que possible à la déformation du front d'onde introduite par les perturbations atmosphériques. L'invention n'est toutefois pas limitée à la mise en oeuvre d'un miroir déformable modal, et d'excellents résultats sont par exemple obtenus avec un miroir déformable à temps de réponse très court qui permet de tirer parti au mieux du démultiplexage modal effectué par l'analyseur 6, comme par exemple le miroir déformable vendu sous la dénomination « DM 97-15 » par la société ALPAO précitée.

De façon particulièrement avantageuse, les modes de Zernike dudit miroir déformable modal formant préférentiellement le dispositif d'optique adaptative 2 correspondent auxdits modes isolés desdits faisceaux lumineux élémentaires 80, 90, 100 produits par l'analyseur optique 6. Dans ce mode de réalisation préférentiel, le dispositif de contrôle 11 peut être extrêmement simple et rapide, voire même consister simplement en un seul amplificateur analogique par mode. Il est ainsi possible de se passer complètement de calculateur et de réaliser une reconstruction du front d'onde qui est purement analogique. Toutefois, le recours à un dispositif de contrôle 11 utilisant de l'électronique numérique s'avère particulièrement utile pour sa facilité de paramétrage et son faible coût. Le dispositif de contrôle 11 inclut donc avantageusement au moins un processeur de signal numérique (DSP). Mais la performance du système 1, en particulier la bande passante de correction, ne sera pas limitée, comme dans l'art antérieur, par la vitesse du détecteur de front d'onde et/ou du calculateur.

L'invention est ainsi, dans ce mode de réalisation avantageux, particulièrement adaptée aux applications concernées par la correction de perturbations ou turbulences atmosphériques, et en particulier des applications pour lesquelles :
- le nombre de modes à corriger est faible (télécommunications, imagerie avec des télescopes de taille de l'ordre de 1 mètre, injection dans des fibres optique...),
- le coût, la robustesse et/ou la compacité sont critiques,
- la vitesse de correction est critique (imagerie de satellites ou de débris, etc.).

Avantageusement, le dispositif d'optique adaptative 2, qui est préférentiellement constitué par un miroir déformable, et de façon encore plus préférentielle par un miroir déformable modal ou à temps de réponse court, comprend une plaque déformable formant ladite surface de traitement optique 3. La plaque déformable 30 présente une face exposée 30A et une face cachée 30B, la face exposée 30A constituant avantageusement une face réfléchissante lorsque le dispositif d'optique adaptative 2 est constitué par un miroir déformable comme illustré. Avantageusement, le dispositif d'optique adaptative 2 comprend également des pattes 40, 41, 42, 43, 44, 45, 46, 47 attachées de manière fixe à ladite plaque déformable 30. De manière avantageuse, les pattes 40, 41, 42, 43, 44, 45, 46, 47 sont venues de matière avec la plaque déformable 30, de sorte que lesdites pattes 40, 41, 42, 43, 44, 45, 46, 47 et la plaque déformable 30 forment un sous-ensemble unitaire, d'un seul tenant. L'invention n'est évidemment pas limitée à ce mode de réalisation spécifique et les pattes 40, 41, 42, 43, 44, 45, 46, 47 peuvent tout à fait être constituées par des pièces distinctes assemblées (par exemple par collage ou tout autre moyen) à la plaque déformable 30.

Avantageusement, chaque patte 40, 41, 42, 43, 44, 45, 46, 47 s'étend radialement, à partir de la plaque déformable 30, selon une répartition angulaire uniforme. Il est cependant possible de prévoir une répartition angulaire irrégulière. Le nombre de pattes 40, 41, 42, 43, 44, 45, 46, 47 peut également être ajusté de sorte que l'invention n'est pas limitée à la mise en oeuvre de huit pattes comme illustré à titre d'exemple aux figures. De façon avantageuse, la plaque déformable 30 et les pattes 40, 41, 42, 43, 44, 45, 46, 47 attachées à cette dernière forment ensemble un corps déformable d'un seul tenant en forme d'étoile à plusieurs branches, chaque branche étant formée par l'une desdites pattes 40, 41, 42, 43, 44, 45, 46, 47.

Avantageusement, et comme illustré aux figures, le dispositif d'optique adaptative 2 comprend un bâti fixe 60 à laquelle la plaque déformable 30 formant la surface de traitement optique 3 est attachée tout en étant capable de se déplacer localement relativement audit bâti fixe 60, sous l'effet des déformations qu'elle subit en réponse aux sollicitations mécaniques contrôlées exercées par les actionneurs 50, 51, 52, 53, 54, 55, 56, 57 du dispositif de pilotage 5. Avantageusement, chaque patte 40, 41, 42, 43, 44, 45, 46, 47 comprend une partie mobile 40A, 41A, 42A, 43A, 44A, 45A, 46A, 47A respective reliée à au moins l'un desdits actionneurs 50, 51, 52, 53, 54, 55, 56, 57 pour que ce dernier puisse déformer localement ladite patte 40, 41, 42, 43, 44, 45, 46, 47 afin que cette dernière transmette un effort de déformation à la plaque déformable 30. Chaque patte 40, 41, 42, 43, 44, 45, 46, 47 comprend en outre avantageusement une partie fixe 40B, 41B, 42B, 43B, 44B, 45B, 46B, 47B respective qui est attachée de manière fixe audit bâti 60 pour être immobilisée relativement à ce dernier. Chaque actionneur 50, 51, 52, 53, 54, 55, 56, 57 peut par exemple être de type magnétique, en deux parties, avec une portion mobile (visible à la figure 6) attachée à la patte 40, 41, 42, 43, 44, 45, 46, 47 correspondante et une portion fixe solidaire du bâti 60. Ledit bâti 60 se présente avantageusement sous la forme d'un anneau (cf. figure 5) rigide d'un seul tenant, auquel sont attachées les parties fixes 40B, 41B, 42B, 43B, 44B, 45B, 46B, 47B des pattes 40, 41, 42, 43, 44, 45, 46, 47.

Une telle conception permet d'obtenir un miroir déformable modal particulièrement simple, fiable et robuste, qui se prête tout particulièrement à un contrôle modal et est donc parfaitement adapté pour être utilisé en conjonction avec un analyseur optique 6 basé sur la technologie MPLC tel que celui décrit précédemment.

Il est également envisageable, selon un mode de réalisation non illustré, qu'au moins l'un des actionneurs du dispositif de pilotage 5 soit conçu pour appliquer une force directement sur la plaque déformable 30, par exemple en son centre géométrique, pour la déformer. La mise en oeuvre d'un tel actionneur central pour déformer la plaque déformable 30 directement son centre, en conjonction avec les autres actionneurs 50, 51, 52, 53, 54, 55, 56, 57 disposés sur la partie mobile de chaque patte 40, 41, 42, 43, 44, 45, 46, 47, permet de réaliser un contrôle modal particulièrement efficace pour obtenir de façon simple et rapide une multitude de modes de Zernike.

Ainsi, dans un mode de réalisation particulièrement avantageux, le système d'optique adaptative 1 utilise les principes de « *mode division multiplexing* » pour décomposer un front d'onde en modes de déformation (par exemple en modes de Zernike), et traduire ainsi chaque mode de déformation de la lumière en un signal lumineux 8, 9, 10 qui est utilisé pour commander la modification contrôlée du comportement optique d'un dispositif d'optique adaptative 2 modal, tel qu'un miroir déformable modal comme décrit précédemment. L'invention correspond ainsi en quelque sorte à l'application à l'optique adaptative de principes techniques concernant jusqu'à présent la fibre optique, pour s'affranchir des temps de réponse liés aux détecteurs de front d'onde classiquement utilisés, tels que les détecteurs de type Shack-Hartmann.

L'invention concerne d'ailleurs également, selon un deuxième aspect, l'utilisation nouvelle d'un analyseur optique 6 conçu pour démultiplexer spatialement, par conversion de lumière multi-plan, un faisceau lumineux d'entrée 7 en une pluralité de faisceaux lumineux élémentaires de sortie 80, 90, 100 correspondant chacun à mode spatial isolé ou à un groupe de modes spatiaux isolés, pour fournir des signaux 8, 9, 10 servant à piloter la modification du comportement optique d'une surface de traitement optique 3 d'un dispositif d'optique adaptative 2 destinée à déformer de façon contrôlée un front d'onde incident 4. Les signaux 8, 9, 10 servent par exemple à piloter la déformation d'une surface réfléchissante déformable d'un miroir déformable, qui peut être un miroir déformable modal. Par exemple, l'analyseur optique 6 peut être conçu sur la base du dispositif PROTEUS-S, ou du dispositif PROTEUS-C ou du dispositif TILBA-R, tous trois commercialisés par la société de droit français CAILABS - 38, Boulevard Albert 1^{er}, 35200 Rennes - France. L'invention n'est cependant pas limitée à la mise en oeuvre d'une conception spécifique d'analyseur optique, et tout autre dispositif de démultiplexage MPLC peut être utilisé sans pour autant que l'on sorte du cadre de l'invention.

Enfin, l'invention concerne également en tant que tel un procédé de pilotage d'un dispositif d'optique adaptative 2, lequel dispositif 2 correspond avantageusement à celui décrit dans ce qui précède et comprend donc une surface de traitement optique 3 (qui est avantageusement une surface déformable) destinée à déformer un front d'onde incident 4 et un dispositif de pilotage 5 relié à ladite surface de traitement optique 3 pour modifier de façon contrôlée le comportement optique de ladite surface de traitement optique 3. Dans l'exemple illustré aux figures, le dispositif de pilotage 5 (qui comprend avantageusement les actionneurs 50, 51, 52, 53, 54, 55, 56, 57) est relié à la surface déformable qui forme avantageusement la surface de traitement optique 3, pour déformer de façon contrôlée ladite surface de traitement optique 3. Le procédé de pilotage est donc avantageusement mis en oeuvre par le système d'optique adaptative 1 décrit dans ce qui précède, de sorte que la description du système d'optique adaptative 1 ci-avant s'applique également au procédé de pilotage. Inversement, la description qui suit du procédé de pilotage s'applique aussi avantageusement au système d'optique adaptative 1 décrit ci-avant.

Le procédé selon l'invention comprend une étape de soumission d'un analyseur optique 6 à un faisceau lumineux d'entrée 7 pour produire en réponse des signaux de sortie 8, 9, 10. Le procédé comprend aussi une étape de commande du dispositif de pilotage 5 en fonction des signaux de sortie 8, 9, 10. Selon l'invention, l'analyseur optique 6 démultiplexe spatialement, par conversion de lumière multi-plan (MPLC), le faisceau lumineux d'entrée 7 en une pluralité de faisceaux lumineux élémentaires de sortie 80, 90,100 correspondant chacun à un mode spatial isolé ou un groupe de modes spatiaux isolés, lesdits signaux de sortie 8, 9, 10 étant formés par lesdits, ou à partir desdits, faisceau lumineux élémentaires 80, 90, 100, comme exposé précédemment en relation avec le système 1.

En définitive, les système, utilisation et procédé selon l'invention permettent de corriger à moindre coût un front d'onde perturbé, de manière particulièrement rapide et fiable, y compris quand le signal utile est très faible.

### POSSIBILITE D'APPLICATION INDUSTRIELLE

L'invention trouve son application industrielle dans la conception, la fabrication et l'utilisation de systèmes d'optique adaptative.

## Revendications

1. Système d'optique adaptative (1) comportant :
- un dispositif d'optique adaptative (2) comprenant une surface de traitement optique (3) destinée à déformer un front d'onde incident (4) et un dispositif de pilotage (5) relié à ladite surface de traitement optique (3) pour modifier de façon contrôlée le comportement optique de ladite surface de traitement optique (3),
- un analyseur optique (6) destiné à être soumis à un faisceau lumineux d'entrée (7) pour produire en réponse des signaux de sortie (8, 9, 10),
- un dispositif de contrôle (11) relié d'une part à l'analyseur optique (6) et d'autre part au dispositif de pilotage (5) pour commander ce dernier en fonction desdits signaux de sortie (8, 9, 10),
**caractérisé en ce que** ledit analyseur optique (6) est conçu pour démultiplexer spatialement, par conversion de lumière multi-plan, le faisceau lumineux d'entrée (7) en une pluralité de faisceaux lumineux élémentaires de sortie (80, 90, 100) correspondant chacun à un mode spatial isolé ou à un groupe de modes spatiaux isolés, lesdits signaux de sortie (8, 9, 10) étant formés par lesdits, ou à partir desdits, faisceaux lumineux élémentaires (80 90, 100).

2. Système d'optique adaptative (1) selon la revendication précédente **caractérisé en ce que** ledit analyseur optique (6) comprend une cavité multipassage (22) délimitée par des premier et deuxième éléments réfléchissants (23, 24) sur chacun desquels ledit faisceau lumineux d'entrée (7) est destiné à se réfléchir une pluralité de fois en une pluralité d'emplacements de réflexion (220, 221, 222, 223, 224, 225, 226, 227, 228, 229, 230) différents, au moins certains desdits emplacements de réflexion (220, 221, 222, 223, 224, 225, 226, 227, 228, 229, 230) étant chacun pourvu d'un élément de modification de phase (25), pour modifier la phase spatiale du faisceau lumineux.

3. Système d'optique adaptative (1) selon la revendication précédente **caractérisé en ce que** les éléments de modification de phase (25) sont formés par une structure de déphasage passive dont la conformation est figée.

4. Système d'optique adaptative (1) selon l'une des revendications 2 et 3 **caractérisé en ce que** lesdits premier et deuxième éléments réfléchissants (23, 24) sont fixes et passifs.

5. Système d'optique adaptative (1) selon l'une des revendications 2 à 4 **caractérisé en ce que** chacun desdits éléments de modification de phase (25) est formé par une irrégularité de surface (26) de l'élément réfléchissant (23) concerné, lesdites irrégularités de surface (26) étant de préférence formées par une microstructuration de ladite surface.

6. Système d'optique adaptative (1) selon l'une des revendications précédentes **caractérisé en ce que** ledit dispositif d'optique adaptative (2) est un miroir déformable pourvu d'une surface réfléchissante déformable formant ladite surface de traitement optique (3).

7. Système d'optique adaptative (1) selon la revendication précédente **caractérisé en ce que** ledit miroir déformable est un miroir déformable modal dont le dispositif de pilotage (5) est conçu pour déformer ladite surface réfléchissante déformable selon différents modes de Zernike, lesdits modes de Zernike dudit miroir déformable modal correspondant de préférence auxdits modes isolés desdits faisceaux lumineux élémentaires (8, 9, 10).

8. Système d'optique adaptative (1) selon l'une des revendications précédentes **caractérisé en ce que** ledit dispositif de pilotage (5) comprend une pluralité d'actionneurs (50, 51, 52, 53, 54, 55, 56, 57) espacés les uns des autres, ledit dispositif de contrôle fournissant à chaque actionneur un signal électrique de commande respectif qui dépend desdits signaux de sortie.

9. Système d'optique adaptative (1) selon la revendication précédente **caractérisé en ce que** ledit dispositif d'optique adaptative (2) comprend une plaque déformable (30) formant ladite surface de traitement optique (3), des pattes (40, 41, 42, 43, 44, 45, 46, 47) attachées de manière fixe à ladite plaque déformable (30), ainsi qu'un bâti fixe (60), chaque patte (40, 41, 42, 43, 44, 45, 46, 47) comprenant une partie mobile (40A, 41A, 42A, 43A, 44A, 45A, 46A, 47A) reliée à au moins l'un desdits actionneurs (50, 51, 52, 53, 54, 55, 56, 57, 58) pour que ce dernier puisse déformer localement ladite patte (40, 41, 42, 43, 44, 45, 46, 47) afin que cette dernière transmette un effort de déformation à ladite plaque déformable (30), chaque patte comprenant en outre une partie fixe (40B, 41B, 42B, 43B, 44B, 45B, 46B, 47B) respective qui est attachée de manière fixe audit bâti (60) pour être immobilisée relativement à ce dernier.

10. Système d'optique adaptative (1) selon l'une des revendications précédentes **caractérisé en ce qu'**il comprend un dispositif (27) de transformation de chaque faisceau élémentaire (80, 90, 100) en un signal électrique respectif, de façon à ce que lesdits signaux de sortie (80, 90, 100) soient électriques.

11. Système d'optique adaptative selon la revendication précédente **caractérisé en ce que** ledit dispositif (27) de transformation de chaque faisceau élémentaire (80, 90, 100) en un signal électrique respectif inclut des capteurs de lumière, comme par exemple des photodiodes, des détecteurs à transfert de charge (CCD) ou des capteurs CMOS.

12. Système d'optique adaptative (1) selon l'une des revendications précédentes **caractérisé en ce qu'**il comprend un diviseur de faisceau (13) agencé relativement au dispositif d'optique adaptative (2) et à l'analyseur optique (6) pour qu'un faisceau lumineux incident (12) soit réfléchi et/ou réfracté par la surface de traitement optique (3) du dispositif d'optique adaptative (2) pour former un faisceau lumineux modifié renvoyé (14) sur ledit diviseur, lequel sépare le faisceau lumineux modifié (14) en un premier faisceau (15) formant ledit faisceau lumineux d'entrée (7) et en un deuxième faisceau (16) à exploiter.

13. Système d'optique adaptative (1) selon la revendication précédente **caractérisé en ce que** ledit diviseur de faisceau (13) est chromatique, de façon à ce que ledit premier faisceau soit formé par un rayonnement dont la bande spectrale diffère de celle du rayonnement formant le deuxième faisceau (16).

14. Utilisation d'un analyseur optique (6) conçu pour démultiplexer spatialement, par conversion de lumière multi-plan, un faisceau lumineux d'entrée (7) en une pluralité de faisceaux lumineux élémentaires de sortie (80, 90, 100) correspondant chacun à un mode spatial isolé ou à un groupe de modes spatiaux isolés, pour fournir des signaux (8, 9, 10) servant à piloter la modification du comportement optique d'une surface de traitement optique (3) d'un dispositif d'optique adaptative (2) destinée à déformer de façon contrôlée un front d'onde incident (4).

15. Procédé de pilotage d'un dispositif d'optique adaptative (2) comprenant une surface de traitement optique (3) destinée à déformer un front d'onde incident (4) et un dispositif de pilotage (5) relié à ladite surface de traitement optique (3) pour modifier de façon contrôlée le comportement optique de ladite surface de traitement optique (3), ledit procédé comprenant une étape de soumission d'un analyseur optique (6) à un faisceau lumineux d'entrée (7) pour produire en réponse des signaux de sortie (8, 9, 10), ainsi qu'une étape de commande du dispositif de pilotage (5) en fonction desdits signaux de sortie (8, 9, 10), ledit procédé étant **caractérisé en ce que** ledit analyseur optique (6) démultiplexe spatialement, par conversion de lumière multi-plan, le faisceau lumineux d'entrée (7) en une pluralité de faisceaux lumineux élémentaires de sortie (80, 90, 100) correspondant chacun à un mode spatial isolé ou à un groupe de modes spatiaux isolés, lesdits signaux de sortie (8 , 9, 10) étant formés par lesdits, ou à partir desdits, faisceaux lumineux élémentaires (80, 90, 100).

## Patentansprüche

1. Adaptives optisches System (1) umfassend :
- eine adaptive Optikvorrichtung (2) mit einer optischen Verarbeitungsfläche (3) zum Verformen einer einfallenden Wellenfront (4) und einer Ansteuerungsvorrichtung (5), die mit der optischen Verarbeitungsfläche (3) verbunden ist, um das optische Verhalten der optischen Verarbeitungsfläche (3) steuerbar zu verändern,
- einen optischen Analysator (6), der dazu bestimmt ist, mit einem Eingangslichtstrahl (7) beaufschlagt zu werden, um als Reaktion darauf Ausgangssignale (8, 9, 10) zu erzeugen,
- eine Steuervorrichtung (11), die einerseits mit dem optischen Analysator (6) und andererseits mit der Ansteuerungsvorrichtung (5) verbunden ist, um letztere in Abhängigkeit von den genannten Ausgangssignalen (8, 9, 10) zu steuern,
**dadurch gekennzeichnet, dass** der optische Analysator (6) dazu ausgelegt ist, den Eingangslichtstrahl (7) durch Mehr-Ebenen-Lichtumwandlung räumlich in eine Vielzahl von elementaren Ausgangslichtstrahlen (80, 90, 100) zu demultiplexen, die jeweils einer isolierten räumlichen Mode oder einer Gruppe von isolierten räumlichen Moden entsprechen, wobei die Ausgangssignale (8, 9, 10) von den oder aus den elementaren Lichtstrahlen (80 90, 100) gebildet werden.

2. Adaptives optisches System (1) nach dem vorhergehenden Anspruch, **dadurch gekennzeichnet, dass** der optische Analysator (6) einen Multipass-Hohlraum (22) umfasst, der von einem ersten und einem zweiten reflektierenden Element (23, 24) begrenzt wird, an denen jeweils der Eingangslichtstrahl (7) dazu bestimmt ist, mehrfach an einer Vielzahl von Reflexionsstellen (220, 221, 222, 223, 224, 225, 226, 227, 228, 229, 230) zu reflektieren, wobei zumindest einige der Reflexionsstellen (220, 221, 222, 223, 224, 225, 226, 227, 228, 229, 230) jeweils mit einem Phasenänderungselement (25) versehen sind, um die räumliche Phase des Lichtstrahls zu ändern.

3. Adaptives optisches System (1) nach dem vorhergehenden Anspruch, **dadurch gekennzeichnet, dass** die Phasenänderungselemente (25) durch eine passive Phasenverschiebungsstruktur gebildet werden, deren Konformation festgelegt ist.

4. Adaptives optisches System (1) nach einem der Ansprüche 2 oder 3, **dadurch gekennzeichnet, dass** das erste und das zweite reflektierende Element (23, 24) fest und passiv sind.

5. Adaptives optisches System (1) nach einem der Ansprüche 2 bis 4, **dadurch gekennzeichnet, dass** jedes der Phasenänderungselemente (25) durch eine Oberflächenunregelmäßigkeit (26) des betreffenden reflektierenden Elements (23) gebildet wird, wobei die Oberflächenunregelmäßigkeiten (26) vorzugsweise durch eine Mikrostrukturierung der Oberfläche gebildet werden.

6. Adaptives optisches System (1) nach einem der vorhergehenden Ansprüche, **dadurch gekennzeichnet, dass** die adaptive Optikvorrichtung (2) ein verformbarer Spiegel ist, der mit einer verformbaren reflektierenden Oberfläche versehen ist, die die optische Verarbeitungsfläche (3) bildet.

7. Adaptives optisches System (1) nach dem vorhergehenden Anspruch, **dadurch gekennzeichnet, dass** der verformbare Spiegel ein modaler verformbarer Spiegel ist, dessen Ansteuerungsvorrichtung (5) so ausgelegt ist, dass sie die verformbare reflektierende Oberfläche gemäß verschiedenen Zernike-Moden verformt, wobei die Zernike-Moden des modalen verformbaren Spiegels vorzugsweise den isolierten Moden der elementaren Lichtstrahlen (8, 9, 10) entsprechen.

8. Adaptives optisches System (1) nach einem der vorhergehenden Ansprüche, **dadurch gekennzeichnet, dass** die Ansteuerungsvorrichtung (5) eine Vielzahl von voneinander beabstandeten Aktuatoren (50, 51, 52, 53, 54, 55, 56, 57) umfasst, wobei die Steuervorrichtung jedem Aktuator ein jeweiliges elektrisches Steuersignal zuführt, das von den Ausgangssignalen abhängig ist.

9. Adaptives optisches System (1) nach dem vorhergehenden Anspruch, **dadurch gekennzeichnet, dass** die adaptive Optikvorrichtung (2) eine verformbare Platte (30), die die optische Verarbeitungsfläche (3) bildet, Laschen (40, 41, 42, 43, 44, 45, 46, 47), die fest an der verformbaren Platte (30) angebracht sind, sowie einen festen Rahmen (60) umfasst, wobei jede Lasche (40, 41, 42, 43, 44, 45, 46, 47) einen beweglichen Teil (40A, 41A, 42A, 43A, 44A, 45A, 46A, 47A) umfasst, der mit mindestens einem der Aktuatoren (50, 51, 52, 53, 54, 55, 56, 57, 58) verbunden ist, damit dieser die Lasche (40, 41, 42, 43, 44, 45, 46, 47) lokal verformen kann, damit letztere eine Verformungskraft auf die verformbare Platte (30) überträgt, jede Lasche ferner einen jeweiligen festen Teil (40B, 41B, 42B, 43B, 44B, 45B, 46B, 47B) umfasst, der fest an dem Rahmen (60) angebracht ist, um relativ zu diesem unbeweglich zu sein.

10. Adaptives optisches System (1) nach einem der vorhergehenden Ansprüche, **dadurch gekennzeichnet, dass** es eine Vorrichtung (27) zur Umwandlung jedes elementaren Strahls (80, 90, 100) in ein jeweiliges elektrisches Signal umfasst, so dass die Ausgangssignale (80, 90, 100) elektrisch sind.

11. Adaptives optisches System nach dem vorhergehenden Anspruch, **dadurch gekennzeichnet, dass** die Vorrichtung (27) zum Umwandeln jedes elementaren Strahls (80, 90, 100) in ein jeweiliges elektrisches Signal Lichtsensoren, wie zum Beispiel Fotodioden, Ladungsübertragungsdetektoren (CCD) oder CMOS-Sensoren, einschließt.

12. Adaptives optisches System (1) nach einem der vorhergehenden Ansprüche, **dadurch gekennzeichnet, dass** es einen Strahlteiler (13) umfasst, der relativ zur adaptiven Optikvorrichtung (2) und zum optischen Analysator (6) angeordnet ist, damit ein einfallender Lichtstrahl (12) von der optischen Verarbeitungsfläche (3) der adaptiven Optikvorrichtung (2) reflektiert und/oder gebrochen wird, um einen modifizierten Lichtstrahl (14) zu bilden, der auf den Teiler zurückgeführt wird, der den modifizierten Lichtstrahl (14) in einen ersten Strahl (15), der den Eingangslichtstrahl (7) bildet, und in einen zweiten Strahl (16), der ausgewertet werden soll, aufteilt.

13. Adaptives optisches System (1) nach dem vorhergehenden Anspruch, **dadurch gekennzeichnet, dass** der Strahlteiler (13) chromatisch ist, so dass der erste Strahl durch eine Strahlung gebildet wird, deren Spektralband sich von demjenigen der Strahlung unterscheidet, die den zweiten Strahl (16) bildet.

14. Verwendung eines optischen Analysators (6), der so ausgelegt ist, dass er einen Eingangslichtstrahl (7) durch Mehr-Ebenen-Lichtumwandlung räumlich in eine Vielzahl von elementaren Ausgangslichtstrahlen (80, 90, 100) demultiplexiert, die jeweils einer isolierten räumlichen Mode oder einer Gruppe von isolierten räumlichen Moden entsprechen, um Signale (8, 9, 10) zu liefern, die dazu dienen, die Änderung des optischen Verhaltens einer optischen Verarbeitungsfläche (3) einer adaptive Optikvorrichtung (2) zu steuern, die dazu bestimmt ist, eine einfallende Wellenfront (4) kontrolliert zu verformen.

15. Verfahren zur Steuerung einer adaptiven Optikvorrichtung (2) mit einer optischen Verarbeitungsfläche (3), die dazu bestimmt ist, eine einfallende Wellenfront (4) zu verformen, und einer mit der optischen Verarbeitungsfläche (3) verbundenen Ansteuerungsvorrichtung (5), um das optische Verhalten der optischen Verarbeitungsfläche (3) gesteuert zu verändern, wobei das Verfahren einen Schritt umfasst, bei dem ein optischer Analysator (6) einem Eingangslichtstrahl (7) ausgesetzt wird, um als Reaktion darauf Ausgangssignale (8, 9, 10) zu erzeugen, sowie einen Schritt des Steuerns der Ansteuerungsvorrichtung (5) in Abhängigkeit von den Ausgangssignalen (8, 9, 10), wobei das Verfahren **dadurch gekennzeichnet ist, dass** der optische Analysator (6) durch Mehr-Ebenen-Lichtumwandlung räumlich demultiplexiert, den Eingangslichtstrahl (7) in eine Vielzahl von elementaren Ausgangslichtstrahlen (80, 90, 100) umwandelt, von denen jeder einer isolierten räumlichen Mode oder einer Gruppe von isolierten räumlichen Moden entspricht, wobei die Ausgangssignale (8, 9, 10) von den oder aus den elementaren Lichtstrahlen (80, 90, 100) gebildet werden.

## Claims

1. An adaptive optical system (1) comprising:
- an adaptive optical device (2) comprising an optical processing surface (3) intended to deform an incident wavefront (4) and a driving device (5) connected to said optical processing surface (3) to controllably modify the optical behaviour of said optical processing surface (3),
- an optical analyser (6) intended to be subjected to an input light beam (7) in order to produce, in response, output signals (8, 9, 10),
- a control device (11) connected, on the one hand, to the optical analyser (6), and on the other hand, to the driving device (5), in order to command the latter as a function of said output signals (8, 9, 10),
**characterized in that** said optical analyser (6) is designed to spatially demultiplex, by multi-plane light conversion, the input light beam (7) into a plurality of elementary output light beams (80, 90, 100) each corresponding to an isolated spatial mode or to a group of isolated spatial modes, said output signals (8, 9, 10) being formed by, or from, said elementary light beams (80, 90, 100).

2. The adaptive optical system (1) according to the preceding claim, **characterized in that** said optical analyser (6) comprises a multi-pass cavity (22) delimited by first and second reflective elements (23, 24) on each of which said input light beam (7) is intended to reflect a plurality of times at a plurality of different reflection locations (220, 221, 222, 223, 224, 225, 226, 227, 228, 229, 230), at least certain of said reflection locations (220, 221, 222, 223, 224, 225, 226, 227, 228, 229, 230) each being provided with a phase modification element (25), to modify the spatial phase of the light beam.

3. The adaptive optical system (1) according to the preceding claim, **characterized in that** the phase modification elements (25) are formed by a passive phase-shift structure whose conformation is fixed.

4. The adaptive optical system (1) according to one of claims 2 and 3, **characterized in that** said first and second reflective elements (23, 24) are fixed and passive.

5. The adaptive optical system (1) according to one of claims 2 to 4, **characterized in that** each of said phase modification elements (25) is formed by a surface irregularity (26) of the concerned reflective element (23), said surface irregularities (26) being preferably formed by a micro-patterning of said surface.

6. The adaptive optical system (1) according to one of the preceding claims, **characterized in that** said adaptive optical device (2) is a deformable mirror provided with a deformable reflecting surface forming said optical processing surface (3).

7. The adaptive optical system (1) according to the preceding claim, **characterized in that** said deformable mirror is a modal deformable mirror whose driving device (5) is designed to deform said deformable reflective surface according to different Zernike modes, said Zernike modes of said modal deformable mirror corresponding preferably to said isolated modes of said elementary light beams (8, 9, 10).

8. The adaptive optical system (1) according to one of the preceding claims, **characterized in that** said driving device (5) comprises a plurality of actuators (50, 51, 52, 53, 54, 55, 56, 57) spaced apart from each other, said control device providing each actuator with a respective electrical command signal that depends of said output signals.

9. The adaptive optical system (1) according to the preceding claim, **characterized in that** said adaptive optical device (2) comprises a deformable plate (30) forming said optical processing surface (3), tabs (40, 41, 42, 43, 44, 45, 46, 47) fixedly attached to said deformable plate (30), as well a fixed frame (60), each tab (40, 41, 42, 43, 44, 45, 46, 47) comprising a movable part (40A, 41A, 42A, 43A, 44A, 45A, 46A, 47A) connected to at least one of said actuators (50, 51, 52, 53, 54, 55, 56, 57, 58) in such a way that the latter can deform locally said tab (40, 41, 42, 43, 44, 45, 46, 47) for the latter to transmit a deformation force to said deformable plate (30), each tab further comprising a respective fixed part (40B, 41B, 42B, 43B, 44B, 45B, 46B, 47B) that is fixedly attached to said frame (60) in order to be immobilized with respect to the latter.

10. The adaptive optical system (1) according to one of the preceding claims, **characterized in that** it comprises a device (27) for transforming each elementary beam (80, 90, 100) into a respective electric signal, in such a way that said output signals (80, 90, 100) are electrical.

11. The adaptive optical system according to the preceding claim, **characterized in that** said device (27) for transforming each elementary beam (80, 90, 100) into a respective electric signal includes light sensors, as for example photodiodes, charge-coupled device (CCD) sensors or CMOS sensors.

12. The adaptive optical system (1) according to one of the preceding claims, **characterized in that** it comprises a beam splitter (13) arranged with respect to the adaptive optical device (2) and the optical analyser (6) in such a way that an incident light beam (12) is reflected and/or refracted by the optical processing surface (3) of the adaptive optical device (2) to form a modified light beam (14) sent back to said splitter, which splits the modified light beam (14) into a first beam (15) forming said input light beam (7) and a second beam (16) to be exploited.

13. The adaptive optical system (1) according to the preceding claim, **characterized in that** said beam splitter (13) is chromatic, in such a way that said first beam is formed by a radiation whose spectral band is different from that of the radiation forming the second beam (16).

14. Use of an optical analyser (6) designed to spatially demultiplex, by multi-plane light conversion, an input light beam (7) into a plurality of elementary output light beams (80, 90, 100) each corresponding to an isolated spatial mode or to a group of isolated spatial modes, to provide signals (8, 9, 10) for driving the modification of optical behaviour of an optical processing surface (3) of an adaptive optical device (2) intended to controllably deform an incident wavefront (4).

15. A method for driving an adaptive optical device (2) comprising an optical processing surface (3) intended to deform an incident wavefront (4) and a driving device (5) connected to said optical processing surface (3) to controllably modify the optical behaviour of said optical processing surface (3), said method comprising a step of subjecting an optical analyser (6) to an input light beam (7) in order to produce, in response, output signals (8, 9, 10), as well as a step of commanding the driving device (5) as a function of said output signals (8, 9, 10), said method being **characterized in that** said optical analyser (6) spatially demultiplex, by multi-plane light conversion, the input light beam (7) into a plurality of elementary output light beams (80, 90, 100) each corresponding to an isolated spatial mode or to a group of isolated spatial modes, said output signals (8, 9, 10) being formed by, or from, said elementary light beams (80, 90, 100).
